# EUROPEAN PATENT SPECIFICATION

(11) **EP 1 650 455 B1**
(45) Date of publication and mention of the grant of the patent: **04.02.2009**
(21) Application number: 05112661.3
(22) Date of filing: 07.05.2003
(51) Int. Cl.: F16D 21/06

(54) **A motor-vehicle double-clutch transmission**
Doppelkupplungsgetriebe für Kraftfahrzeug
Transmission à double embrayage pour un véhicule

(30) Priority: 08.05.2002 IT TO20020382
(43) Date of publication of application: 26.04.2006
(62) Divisional of application: 03010242.0
(73) Proprietor: C.R.F. Società Consortile per Azioni, 10043 Orbassano (TO) (IT)
(72) Inventor: Caenazzo, Dario, I-10043, Orbassano (TORINO) (IT); Mesiti, Domenico, I-10043, Orbassano (Torino) (IT); Pregnolato, Gianluigi, I-10043, Orbassano (Torino) (IT); Uberti, Maurizio, I-10043, Orbassano (Torino) (IT)
(74) Representative: Rondano, Davide

(56) References cited:
- DE-A1- 10 004 189
- US-A- 3 185 274
- US-A- 5 755 302

## Description

The present invention relates to a motor-vehicle double-clutch transmission of the type specified in the preamble of Claim 1.

A motor-vehicle double-clutch transmission of the above-specified type is known from US-A-3 185 274. According to this known arrangement, the driving portion of the clutch unit is supported on the outer input shaft of the gearbox by means of a ball bearing. The outer race of the ball bearing is axially restrained with respect to the driving portion between a shoulder and a snap-ring, whereas the inner race is axially free on the outer shaft. Therefore, the axial forces resulting from actuation of the clutches are transmitted directly to the crankshaft due to the rigid connection between the driving portion and the flywheel on the one hand, and between the flywheel and the crankshaft on the other.

The object of the invention is therefore to provide a motor-vehicle double-clutch transmission which is arranged in such a manner that the clutch-actuating forces are not discharged onto the crankshaft and do not therefore represent a potential critical factor for the axial supports thereof.

Another object of the present invention is to provide a motor-vehicle double-clutch transmission which can also operate in spite of misalignments and eccentricities between the crankshaft and the gearbox input shafts.

A further object of the present invention is to provide a motor-vehicle double-clutch transmission having a clutch unit that can filter out the torsional and axial oscillations of the crankshaft.

These objects are achieved in full by a motor-vehicle double-clutch transmission having the characteristics defined in independent Claim 1. Further advantageous characteristics of the invention are defined in the dependent claims.

The main advantage of a motor-vehicle double-clutch transmission according to the present invention is that the crankshaft, and consequently also its axial supports (usually friction bearings), are not loaded axially during the actuation (disengagement/engagement) of the clutches. It is thus possible to increase the axial loads required to actuate the clutches without thereby increasing the stresses on the axial bearings of the crankshaft. At the same time it is possible to reduce the lever arms of the disc which bring about the disengagement/engagement of the clutches, with a consequent reduction in the actuation travel required.

The characteristics and the advantages of the invention will become clearer from the following detailed description which is given purely by way of non-limiting example with reference to the appended drawings, in which:
Figure 1 is a longitudinal section through a first embodiment according to the present invention of a motor-vehicle double-clutch transmission, and
Figure 2 is a longitudinal section through a second embodiment according to the present invention of a motor-vehicle double-clutch transmission.

In the description and the claims which follow, terms such as "longitudinal" or "axial", as well as "radial" or "transverse" are intended to refer to the mounted condition on a motor vehicle.

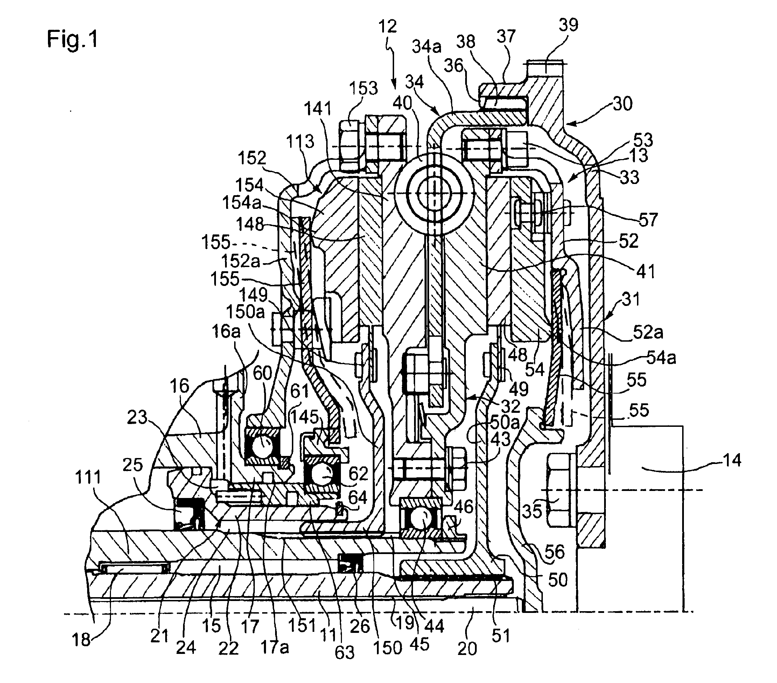

With reference to Figure 1, a motor-vehicle double-clutch transmission, advantageously (but not necessarily) of the power-shift type, comprises:
- a gearbox, which is not shown since it is known (for example, from Italian patent application TO2001A000286) with two coaxial input shafts, that is, an inner input shaft 11 and an outer input shaft 111, respectively, and
- a clutch unit 12 with two clutches 13 and 113 of the normally-engaged, single-plate, dry type, for connecting a crankshaft 14 of the internal combustion engine, of which only the end portion facing towards the transmission is shown, for rotation with the gearbox input shafts 11 and 111, respectively.

The gearbox is enclosed by a support housing 16, shown partially in Figure 1 and having, at the end facing towards the clutch unit 12, a tubular extension 17 with a central axial hole 17a through which the two coaxial input shafts 11 and 111 extend. The outer shaft 111 has a tubular structure with a substantially cylindrical, central, coaxial cavity 15. The cavity 15 houses the inner shaft 11 which is supported for rotation by support elements of known type, including, for example, a needle bearing 18. The inner shaft 11 also has a tubular structure with a substantially cylindrical, central, coaxial cavity 19 in which a rod 20 for actuating the clutch 13 is slidable axially.

A sleeve 21 is interposed radially between the outer input shaft 111 and the cylindrical hole 17a formed in the extension 17 of the support housing 16. At the end facing towards the clutch unit 12, the sleeve 21 forms a cylindrical portion 22 which is coaxial with the two input shafts and which defines, with the cylindrical hole 17a, an outer annular space 23 and, with the shaft 111, an inner annular space 24.

Two oil-seal rings 25 and 26 are fitted between the sleeve 21 and the outer input shaft 111 and between the two input shafts 11 and 111, respectively, to prevent lubricating oil passing from the gearbox compartment, which operates in an oil bath, to the clutch unit 12 which, on the other hand, operates dry.

A two-mass flywheel, generally indicated 30 and comprising a first mass 31 and a second mass 32, is interposed axially between the clutch unit 12 and the crankshaft 14.

The first mass 31 of the flywheel 30 comprises a first element 33 and a second element 34 which are arranged side by side, the first facing towards the engine and the second towards the gearbox.

The first element 33 of the mass 31 is formed as a disc with an axial section that is variously shaped but extends substantially radially. A plurality of holes are formed in a radially inner position of the element 33 for the fixing of the element to the crankshaft 14 by means of screws 35 and, in a radially outer position, a tubular extension 37 provided with an internal ring gear 36 projects axially towards the second element 34. The element 33 also has, on its outer periphery, a ring gear 39 for meshing with a pinion of the electric starter (not shown) for starting the internal combustion engine of the vehicle.

The second element 34 of the mass 31 also is formed as a disc having a substantially L-shaped axial section with a cylindrical annular portion 34a which projects axially towards the first element 33. A ring gear 38 is formed on the outer periphery of the portion 34a and meshes permanently with the ring gear 36 of the first element 33 so as to connect the two elements 33 and 34 of the first mass 31 for rotation. The element 34 is also connected to the second mass 32 through a torsional damper 40, such as for example flexible-coupling springs.

The second mass 32 of the flywheel 30 also comprises a first element 41 and a second element 141, both of which are disc-shaped and which are disposed on axially opposite sides of the second element 34 of the first mass 31 and are fixed together by means of screws 43. The mass 32 is supported for rotation by a radial ball bearing 44 mounted on the outer gearbox input shaft 111. The outer race of the bearing 44 is clamped axially between a pair of shoulders provided by the two elements 41 and 141 of the mass 32. The inner race of the bearing 44 is mounted in axial abutment on one side with a side of a splined portion 45 formed on the outer cylindrical surface of the shaft 111, and is clamped axially on the opposite side by means of a ring nut 46.

The first element 41 of the second mass 32 of the flywheel 30 is also arranged to act as an abutment member for the clutch 13 associated with the inner gearbox input shaft 11.

The clutch 13 is composed of a driven portion and of a driving portion which are fast for rotation with the input shaft 11 and with the crankshaft 14 (via the flywheel 30), respectively, and which can be coupled torsionally with each other to permit the transmission of torque between the shafts 11 and 14.

The driven portion of the clutch 13 comprises a plate 48 which is provided with rings made of friction material on both of its axial faces and which is fixed, by means of rivets 49, to a flange 50a of a hub 50 arranged so as to be slidable axially along a splined end portion 51 of the inner gearbox input shaft 11.

In addition to the above-described abutment member 41, the driving portion of the clutch 13 comprises a cover 52 fixed to the periphery of the member 41 by means of screws 53 and having a substantially vertical wall 52a which extends radially inwards on the axially opposite side of the plate 48 to the member 41. An axially movable clutch pressure plate 54 interposed between the plate 48 and the cover 52 is restrained for rotation with the latter by means of tangential tabs 57. The clutch pressure plate 54 is urged axially against the plate 48 by a disc spring 55 so that the plate 48 is kept clamped between the abutment member 41 and the pressure plate 54 and can therefore transmit torque with these two components as a result of the friction between the axial abutment surfaces.

The disc spring 55 is clamped axially between its two radially outer and radially inner end portions, respectively, by the vertical wall 52a of the cover 52 and by a disc-shaped engagement element 56 which can be moved axially by the actuating rod 20. When the spring is not deformed, that is, when no command is imparted to the clutch 13 by means of the rod 20, a radially intermediate portion of the spring 55 exerts a leftward axial pressure (as observed in Figure 1) against a projection 54a of the clutch pressure plate 54, thus keeping the clutch 13 engaged.

In order to disengage the clutch 13 it is necessary to move the actuating rod 20 towards the right along the cavity 19 of the inner input shaft 11 so as to urge the radially inner portion of the spring 55 by means of the engagement element 56. The spring 55 pivots on the cover 52 and thus tends to rotate about its radially outer edge until it achieves the deformed configuration shown in broken line in Figure 1. In this condition, the clutch pressure plate 54, which is no longer subject to the axial pressure of the spring 55, moves away from the plate 48 by virtue of the action of the tangential tabs 57, thus interrupting the transmission of torque between the driving portion and the driven portion of the clutch.

The structure of the clutch 113 associated with the outer gearbox input shaft 111 will now be described, again with reference to Figure 1, in which the components and parts of the clutch 113 which correspond in structure and/or function to those of the clutch 13 are indicated by the same reference numerals but increased by 100.

The clutch 113 is composed of a driven portion and of a driving portion which are fast for rotation with the outer input shaft 111 and with the crankshaft 14 (via the flywheel 30), respectively, and which can be coupled torsionally with each other to permit the transmission of torque between the shafts 111 and 14.

The driven portion of the clutch 113 comprises a plate 148 which is provided with rings made of friction material on both of its axial faces and which is fixed by means of rivets 149 to a flange 150a of a hub 150 arranged so as to be slidable axially along a splined portion 151 of the outer gearbox input shaft 111.

The driving portion of the clutch 113 comprises, substantially:
- an abutment member provided by the second element 141 of the second mass 32 of the flywheel 30,
- a cover 152 fixed by screws 153 to the periphery of the member 141 and having a substantially vertical wall 152a which extends radially inwards on the axially opposite side of the plate 148 to the member 141, separating the clutch unit 12 from the gearbox, and
- an axially movable clutch pressure plate 154 interposed between the plate 148 and the cover 152 and restrained for rotation with the latter by means of tangential tabs (not visible in Figure 1).

The cover 152 is supported for rotation by a radial ball bearing 60 fitted on the tubular extension 17 of the gearbox housing 16. The outer race of the bearing 60 is free axially, whereas the inner race is clamped by a snap ring 61 against a shoulder formed in the housing 16.

In rest conditions, that is, when the driver of the vehicle is not imparting any commands to the clutch, the plate 148 is kept clamped between the abutment member 141 and the clutch pressure plate 154 as a result of the axial pressure exerted by a disc spring 155 on the plate 154.

The disc spring 155 is restrained on the vertical wall 152a of the cover 152 and bears, with its two radially outer and radially inner end portions, respectively, against a projection 154a of the clutch pressure plate 154, and against an annular engagement element 145. The element 145 is supported for rotation by a radial ball bearing 62 mounted on an end of a plunger 63.

The plunger 63 is arranged so as to be slidable axially in the annular space 23 formed between the cylindrical portion 22 of the sleeve 21 and the tubular extension 17 of the gearbox support housing 16. The supply of oil under pressure to the annular space 23 from a duct formed in a vertical wall 16a of the gearbox housing 16 brings about rightward axial movement of the plunger 63 as far as a travel-limit position defined by a snap ring 64 fitted on the end of the sleeve 22 facing the engine. By means of the engagement element 145, the plunger 63 pulls along the radially inner end portion of the spring 155 which thus tends to pivot about its radially intermediate portion, which is restrained on the cover 152, until it achieves the deformed configuration shown in broken outline in Figure 1. In this condition, the clutch pressure plate 154, which is no longer subject to the axial pressure of the spring 155, moves away from the plate 148 by virtue of the action of the tangential tabs, thus interrupting the transmission of torque between the driving portion and the driven portion of the clutch 113.

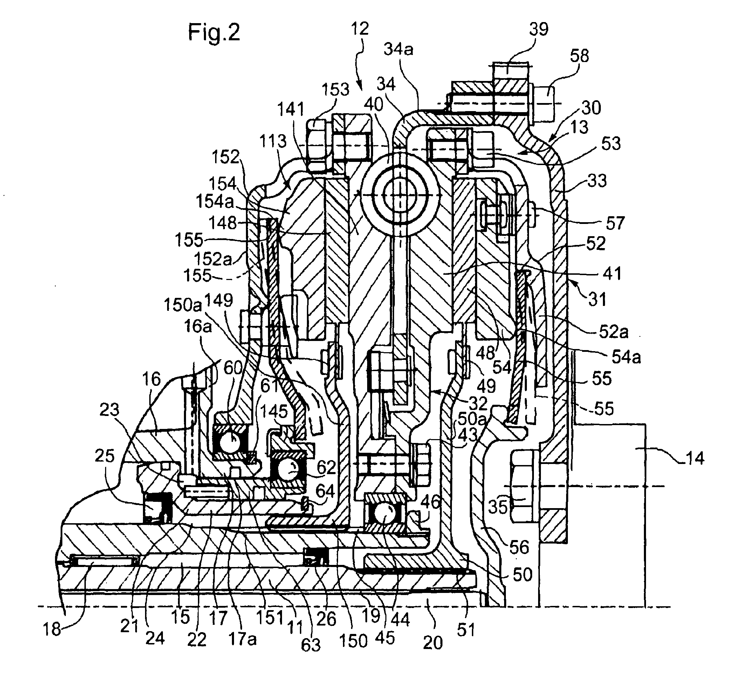

A second embodiment according to the present invention of a motor-vehicle double-clutch transmission is shown in Figure 2 in which parts and elements identical or corresponding to those of Figure 1 have been given the same reference numerals.

As is clear from a comparison between Figures 1 and 2, this second embodiment is substantially identical to that described above, with the difference that the first and second elements 33 and 34 of the first mass 31 of the flywheel 30 are connected for rotation with one another by means of screws 58 instead of by meshing between respective ring gears 36 and 38.

## Claims

1. A double-clutch transmission for a motor vehicle, the transmission comprising:
a gearbox having two coaxial input shafts (11, 111), namely an inner input shaft (11) and an outer hollow input shaft (111),
a coupling unit (12) having first and second dry clutches (13, 113) operable to connect a crankshaft (14) of the motor vehicle for rotation with the inner input shaft (11) and the outer input shaft (111), respectively, wherein each clutch (13, 113) includes a driven portion (48, 50, 148, 150) connected for rotation with the respective input shaft (11, 111) and a driving portion (41, 52, 54, 141, 152, 154) intended to be connected for rotation with the crankshaft (14), and wherein the driving portions (41, 52, 54, 141, 152, 154) of the first and second clutches (13, 113) comprise each a respective abutment member (41, 141) intended to be connected for rotation with the crankshaft (14), and
a bearing (44) arranged between the driving portions (41, 52, 54, 141, 152, 154) of the clutches (13, 113) and the outer input shaft (111),
**characterized in that** the bearing (44) is mounted on the outer input shaft (111), whereby the outer race of the bearing (44) is clamped axially between the two abutment members (41, 141), and the inner race of the bearing (44) is mounted in axial abutment on one side on the outer cylindrical surface of the outer input shaft (111) and is clamped axially on the opposite side, so that the clutch-actuating forces are not discharged onto the crankshaft and do not therefore represent a potential critical factor for the axial supports thereof.

2. A transmission according to Claim 1, wherein the bearing (44) is a radial ball bearing.

3. A transmission according to Claim 1 or Claim 2, wherein the driven portions (48, 50, 148, 150) of the first and second clutches (13, 113) comprise each a respective friction plate (48, 148) which is connected for rotation with the respective input shaft (11, 111) and is urged against the respective abutment member (41, 141).

4. A transmission according to Claim 3, wherein the first and second clutches (13, 113) further comprise each a respective resilient element (55, 155) configured to keep the clutch (13, 113) in a normally engaged condition and a cover member (52, 152) fixed for rotation with the respective abutment member (41, 141) and arranged to provide a restraint for the respective resilient element (55, 155).

5. A transmission according to Claim 4, wherein the cover member (152) of the first clutch (113) is supported for rotation by a bearing (60) mounted on a gearbox housing (16).

6. A transmission according to any of the preceding claims, further comprising an actuating rod (20) which is slidably arranged in a coaxial cavity (19) provided in the inner input shaft (11) and is operable to actuate the first clutch (13) so as to be disengaged.

7. A transmission according to any of the preceding claims, further comprising an annular plunger (63) arranged axially in an annular space (23) formed between a sleeve (21) and a tubular extension (17) of the gearbox housing (16) around the outer input shaft (111) so as to be axially slidable in the space (23), the plunger (63) being operable to actuate the second clutch (113) so as to be disengaged.

8. A transmission according to any of Claims 3 to 5, wherein the abutment members (41, 141) of the first and second clutches (13,113) are connected to a two-mass flywheel (30) interposed between the coupling unit (12) and the crankshaft (14).

## Patentansprüche

1. Doppelkupplungsgetriebe für ein Kraftfahrzeug, wobei das Getriebe umfasst:
ein Getriebegehäuse mit zwei koaxialen Eingangswellen (11, 111), das heißt, einer inneren Eingangswelle (11) und einer äußeren hohlen Eingangswelle (111),
eine Kupplungseinheit (12) mit einer ersten und einer zweiten Trockenkupplung (13, 113), die in Funktion eine Kurbelwelle (14) des Kraftfahrzeugs zur Drehung mit der inneren Eingangswelle (11) bzw. der äußeren Eingangswelle (111) verbinden können, wobei jede Kupplung (13, 113) einen angetriebenen Abschnitt (48, 50, 148, 150), der zur Drehung mit der jeweiligen Eingangswelle (11, 111) verbunden ist, und einen antreibenden Abschnitt (41, 52, 54, 141, 152, 154) enthält, der zur Drehung mit der Kurbelwelle (14) verbunden werden soll, und wobei die Antriebsabschnitte (41, 52, 54, 141, 152, 154) der ersten und der zweiten Kupplung (13, 113) jeweils ein entsprechendes Anliegelement (41, 141) umfassen, dass zur Drehung mit der Kurbelwelle (14) verbunden werden soll, und
ein Lager (44), das zwischen den antreibenden Abschnitten (41, 52, 54, 141, 152, 154) der Kupplungen (13, 113) und der äußeren Eingangswelle (111) angeordnet ist,
**dadurch gekennzeichnet, dass** das Lager (44) an der äußeren Eingangswelle (111) angebracht ist, wobei der äußere Laufring des Lagers (44) axial zwischen den zwei Anliegelementen (41, 141) festgeklemmt ist und der innere Laufring des Lagers (44) in axialem Anliegen an einer Seite an der äußeren zylindrischen Fläche der äußeren Eingangswelle (111) angebracht ist und an der gegenüberliegenden Seite axial festgeklemmt ist, so dass die Kupplungsbetätigungskräfte nicht auf die Kurbelwelle abgeleitet werden und daher keinen potentiellen kritischen Faktor für die axialen Lagerungen derselben darstellen.

2. Getriebe nach Anspruch 1, wobei das Lager (44) ein Radialkugellager ist.

3. Getriebe nach Anspruch 1 oder Anspruch 2, wobei die angetriebenen Abschnitte (48, 50, 148, 150) der ersten und der zweiten Kupplung (13, 113) jeweils eine entsprechende Reibplatte (48, 148) umfassen, die zur Drehung mit der entsprechenden Eingangswelle (11, 111) verbunden ist und an das entsprechende Anliegelement (41, 141) gedrückt wird.

4. Getriebe nach Anspruch 3, wobei die erste und die zweite Kupplung (13, 113) des Weiteren jeweils ein entsprechendes federndes Element (55, 155), das so konfiguriert ist, dass es die Kupplung (13, 113) in einem normalerweise in Eingriff befindlichen Zustand hält, sowie ein Abdeckungselement (52, 152) umfassen, das zur Drehung mit dem entsprechenden Anliegelement (41, 141) fixiert und so eingerichtet ist, dass es einen Rückhalt für das entsprechende federnde Element (55, 155) darstellt.

5. Getriebe nach Anspruch 4, wobei das Abdeckungselement (152) der ersten Kupplung (113) zur Drehung durch ein Lager (60) gelagert ist, das an einem Getriebegehäuse (16) angebracht ist.

6. Getriebe nach einem der vorangehenden Ansprüche, das des Weiteren eine Auslösestange (20) umfasst, die verschiebbar in einem koaxialen Hohlraum (19) angeordnet ist, der in der inneren Eingangswelle (11) vorhanden ist, und die betätigt werden kann, um die erste Kupplung (13) so auszulösen, dass sie ausgerückt wird.

7. Getriebe nach einem der vorangehenden Ansprüche, das des Weiteren einen ringförmigen Kolben (63) umfasst, der axial in einem ringförmigen Raum (23) angeordnet ist, der zwischen einer Buchse (21) und einer röhrenförmigen Verlängerung (17) des Getriebegehäuses (16) um die äußere Eingangswelle (111) herum so angeordnet ist, dass er in dem Raum (23) axial verschoben werden kann, wobei der Kolben (63) betätigt werden kann, um die zweite Kupplung (113) so auszulösen, dass sie ausgerückt wird.

8. Getriebe nach einem der Ansprüche 3 bis 5, wobei die Anliegelemente (4.1, 141) der ersten und der zweiten Kupplung (13, 113) mit einem Schwungrad (30) mit zwei Massen verbunden sind, das zwischen der Kupplungseinheit (12) und der Kurbelwelle (14) angeordnet ist.

## Revendications

1. Transmission à double embrayage pour un véhicule à moteur, la transmission comprenant :
une boîte de vitesses ayant deux arbres d'entrées coaxiaux (11, 111), à savoir un arbre d'entrée intérieur (11) et un arbre d'entrée creux extérieur (111),
une unité de couplage (12) comprenant un premier et un second embrayage à sec (13, 113) dont la fonction est de relier un vilebrequin (14) du véhicule à moteur en vue d'une rotation avec l'arbre d'entrée intérieur (11) et avec l'arbre d'entrée extérieur (111), respectivement, dans laquelle chaque embrayage (13, 113) inclut une portion menée (48, 50, 148, 150) reliée en vue d'une rotation avec l'arbre d'entrée respectif (11, 111) et une portion menante (41, 52, 54, 141, 152, 154) destinée à être reliée en vue d'une rotation avec le vilebrequin (14), et
dans laquelle les portions menantes (41, 52, 54, 141, 152, 154) du premier et du second embrayage (13, 113) comprennent chacune un élément de butée respectif (41, 141) destiné à être relié en vue d'une rotation avec le vilebrequin (14), et
un palier (44) agencé entre les portions menantes (41, 52, 54, 141, 152, 154) des embrayages (13,113) et l'arbre d'entrée extérieur (111),
**caractérisée en ce que** le palier (44) est monté sur l'arbre d'entrée extérieur (111), de telle sorte que la bague extérieure du palier (44) est serrée axialement entre les deux éléments de butée (41, 141), et la bague intérieure du palier (44) est montée en butée axiale sur un côté de la surface cylindrique extérieure de l'arbre d'entrée extérieur (111) et est serrée axialement sur le côté opposé, de sorte que les forces d'actionnement des embrayages ne sont pas déchargées vers le vilebrequin et ne représentent par conséquent pas un facteur critique potentiel pour les supports axiaux de celui-ci.

2. Transmission selon la revendication 1, dans laquelle le palier (4) est un palier à billes radial.

3. Transmission selon la revendication 1 ou 2, dans laquelle les portions menées (48, 50, 148, 150) du premier et du second embrayage (13, 113) comprennent chacune une plaque de friction respective (48, 148) qui est reliée en vue d'une rotation avec l'arbre d'entrée respectif (11, 111) et qui est forcée contre l'élément de butée respectif (41, 141).

4. Transmission selon la revendication 3, dans laquelle le premier et le second embrayage (13, 113) comprennent en outre chacun un élément élastique respectif (55, 155) configuré pour maintenir l'embrayage (13, 113) dans une condition normalement engagée, et un élément de couverture (52, 152) fixé en vue d'une rotation avec l'élément de butée respectif (41, 141) et agencé pour constituer une restriction pour l'élément élastique respectif (55, 155).

5. Transmission selon la revendication 4, dans laquelle l'élément de couverture (152) du premier embrayage (113) est supporté en vue d'une rotation par un palier (60) monté sur un carter de boîte de vitesses (16).

6. Transmission selon l'une quelconque des revendications précédentes, comprenant en outre une tige d'actionnement (20) qui est agencée en coulissement dans une cavité coaxiale (19) prévue dans l'arbre d'entrée intérieur (11) et dont la fonction est d'actionner le premier embrayage (13) de manière à le désengager.

7. Transmission selon l'une quelconque des revendications précédentes, comprenant en outre un plongeur annulaire (63) agencé axialement dans un espace annulaire (23) formé entre un manchon (21) et une extension tubulaire (17) du carter de boîte de vitesses (16) autour de l'arbre d'entrée extérieur (111) de manière à être capable de coulisser axialement dans l'espace (23), le plongeur (63) ayant pour fonction d'actionner le second embrayage (113) de manière à le désengager.

8. Transmission selon l'une quelconque des revendications 3 à 5, dans lequel les éléments de butée (41, 141) du premier et du second embrayage (13, 113) sont reliés à un volant d'inertie (30) à deux masses interposé entre l'unité de couplage (12) et le vilebrequin (14).
